# EUROPEAN PATENT APPLICATION

(11) **EP 3 954 726 A1**
(43) Date of publication of application: **16.02.2022**
(21) Application number: 20788647.4
(22) Date of filing: 17.03.2020
(51) Int. Cl.: C08J 3/00, C08J 3/20, C08J 5/00, C08J 5/04, B82Y 30/00, C08L 101/00, C08L 77/00, C08L 23/04, C08L 69/00

(54) **METHOD FOR PRODUCING A MODIFIER FOR PREPARING A COMPOSITE MATERIAL BASED ON A THERMOPLASTIC POLYMER**

(30) Priority: 12.04.2019 RU 2019111174
(71) Applicant: MCD Technologies S.a.r.l, 3364 Leudelange (LU)
(72) Inventor: PREDTECHENSKIY, Mikhail Rudolfovich, g. Novosibirsk, 630008 (RU); SAJK, Vladimir Oskarovich, Novosibirsk, 630117 (RU); BEZRODNYJ, Aleksandr Evgenevich, Novosibirsk, 630091 (RU); SMIRNOV, Sergey Nikolaevich, Novosibirsk, 630024 (RU); GALKOV, Mikhail Sergeevich, Mezhdurechensk, 652873 (RU); VERHOVOD, Timofej Dmitrievich, Novosibirsk, 630099 (RU)
(74) Representative: Gill Jennings & Every LLP
(86) International application number: PCT/RU2020/000144
(87) International publication number: WO 2020/209755

(57) **Abstract**

The invention proposes a method for producing a high-endurance composite material based on a thermoplastic polymer (polyamide or polycarbonate), comprising mixing a polymer with fibres and carbon nanotubes. Carbon nanotubes are introduced into the polymer as part of a modifier comprising a polymer and carbon nanotubes, with the concentration of carbon nanotubes in the modifier being 5-33 wt%. The invention also proposes a method for producing a modifier.

## Description

### Field of the Invention

The invention relates to technologies for preparing composite materials based on thermoplastic polymers comprising carbon, glass, or basalt fibers (hereinafter, "fibers") and carbon nanotubes (hereinafter, "CNT").

### Related Art

Various fillers and additives, including carbon-based additives, are used to improve physical and mechanical properties of thermoplastic polymers. Methods are known for preparing a composite material from thermoplastic polymers with the addition of carbon fibers [US Patent No. 9249295]. However, composite materials based on thermoplastic polymers containing carbon fiber alone have several drawbacks. A substantial drawback of such composites is low adhesion between carbon fibers and the polymer matrix. This reduces maximum achievable strength of a composite material based on a thermoplastic polymer, which limits its applicability.

Special attention should also be paid to composite materials based on thermoplastic polymers containing CNT as a reinforcing additive, because, due to their unique physical and mechanical properties, CNT are considered one of the most promising fillers for enhancing mechanical strength of thermoplastic polymers. Moreover, the addition of CNT can provide composite materials with electrical conductivity.

A method is known for preparing a composite material based on a thermoplastic polymer, which is based on chemical interaction between the polymer and modified carbon nanotubes, wherein the amount of carbon nanotubes in the composite material is 0.1 to 5 wt.%, and the polymer is produced directly in the synthesis reactor from the monomer as a result of polymerization [US Patent No. 6426134]. The drawback of this method is the sophisticated manufacturing process of the composite material, required because of the need to modify carbon nanotubes and conduct the polymerization reaction in the reactor, which does not allow the use of standard equipment designed to handle thermoplastic materials.

A method is known for preparing a composite material which comprises mixing polyamide-6 pellets (hereinafter, PA-6) with carbon nanotubes and carbon or basalt fibers using a twin screw extruder, while finished samples of the composite material are prepared by injection molding [Synergistic Effects of Carbon Nanotubes on the Mechanical Properties of Basalt and Carbon Fiber-Reinforced Polyamide 6 Hybrid Composites, Jozsef Szakacs and Laszlo Meszaros, Journal of Thermoplastic Composite Materials 2018, vol. 3]. A drawback of this method is that it is impossible to achieve maximum reinforcement of the composite material because the strength of composite materials depends on how well CNTs are distributed in the matrix, but CNTs are highly prone to aggregation, which prevents producing a high-quality dispersion of nanotubes. Vigorous agitation to reduce aggregation is not applicable in this case because the use of extruders with vigorous agitation is known to damage carbon fibers and, thus, reduce the strength of the composite material.

Therefore, the conventional art has its drawbacks, which include insufficient strength of known composite materials based on thermoplastic polymers.

### Summary of the Invention

The proposed invention solves the problem of developing a method for producing a high-performance composite material based on a thermoplastic polymer. To solve this problem, a method for preparing a modifier, i.e., a high-quality concentrate of carbon nanotubes in the polymer, and its use for preparing the composite material, are provided. A synergistic effect obtained by introducing the CNT-containing modifier and fibers into a composite material is demonstrated in increasing the strength of the final composite material that also has electrical conductivity.

The problem is solved by providing a method for preparing a high-performance composite material based on a thermoplastic polymer (e.g., polyamide or polycarbonate), which comprises mixing the polymer with fibers and CNT. CNT are introduced into the polymer from a modifier comprising a polymer and CNT. The CNT concentration in the modifier is from 5 to 33 wt.%. The concentration of fibers in the composite material does not exceed 70 wt.%. Fibers can be carbon, basalt, or glass fibers. The polymer is mixed with fibers and the CNT-containing modifier using an extruder. Single-wall CNT (hereinafter, "SWCNT") are advantageously used. SWCNT marketed under the trade name Tuball are used for preparing the modifier. Main properties of Tuball SWCNT are: carbon content of more than 85 wt.%, SWCNT content of more than 75 wt.%, length of more than 5 µm, average outer diameter of 1.6 ± 0.5 nm, ratio of the G- and D-mode intensities in Raman spectrum under excitation at 532 nm exceeds 100, content of metallic impurities of less than 15 wt.%, specific surface area of more than 500 m²/g.

The problem is also solved by providing a modifier for preparing a composite material based on a thermoplastic polymer containing carbon nanotubes, wherein the content of nanotubes in the modifier is from 5 to 33 wt.%.

The carbon nanotubes contained in the modifier are advantageously single-wall nanotubes, and at least one thermoplastic polymer is selected from the group of: polyamide or polycarbonate.

The problem is also solved by providing a method for producing a modifier for preparing a high-performance composite material based on a thermoplastic polymer.

In the first embodiment, a solution-based method for producing a modifier based on a thermoplastic polymer is provided, which comprises mixing a thermoplastic polymer with metal salts or acids to reduce hydrogen bonds of the polymer in a polar solvent. The polymer concentration is typically 3 to 15 wt.% of the total weight, and the concentration of salts/acids is 3 to 15 wt.%. Mixing is performed until the polymer is fully dissolved, and after that, CNTs are added to the amount of up to 5 wt.% inclusive, and then a coagulant is added to the dispersion while stirring, then dispersion is filtered and the filter cake is rinsed and dried. The thermoplastic polymer is polyamide. The polar solvent can be an alcohol, N-methylpyrrolidone, or dimethylacetamide.

The solvent concentration in the mixture before coagulation is 70 to 94%. These solvents are the most efficient. Among salts, lithium chloride and calcium chloride provide the best results. The coagulant can be water or pure ethanol. A high-speed disperser, a probe sonicator, a microfluidic processor, a high-shear mixer, or a three roll mill can be used to obtain a good CNT dispersion. A membrane filter with a pore size of 5 to 100 microns can be used for filtration. The remaining water in the filtrate is removed by vacuum treatment after grinding and by heating in a drying cabinet and/or on a rotary evaporator.

The same method for preparing the modifier can be used almost unchanged for any other polyamide, such as, for example, semi-aromatic polyphthalamide (PPA) or MXD-6.

In the second embodiment, the modifier for preparing a high-performance composite material based on a thermoplastic polymer (PA-6) is obtained by anionic polymerization. This method comprises mixing CNTs with melted caprolactam, heating the resulting dispersion, and processing it with a probe sonicator, a microfluidic processor, or a high-speed mixer to improve the dispersion quality. The dispersion is heated while stirring at a temperature of 80 to 120 °C in the absence of moisture, which can be achieved by continuously purging with dry nitrogen or any other dry inert gas. The CNT concentration in the dispersion according to the method is up to 1 wt.% inclusive. A catalyst is added into the dispersion, which can be alkali metals, hydrides of alkali metals, oxides or hydroxides thereof, or their compounds with caprolactam. The catalyst concentration in the working mixture is 0.1 to 10 wt.% inclusive. Polymerization is initiated by increasing the temperature and by an activator, whose concentration in the working mixture can control the length of the polymer chain; the concentration can vary in the range of 0.1 to 10 wt.% inclusive, more preferably of 0.1 to 1 wt.% inclusive. Isocyanates or diisocyanates or their thermally activated analogs can be used as an activator. Polymerization is typically carried out at a temperature in the range of 120 °C to 180 °C for a duration not exceeding thirty minutes.

In the third embodiment, the modifier for preparing a high-performance composite material based on a thermoplastic polymer (PA-6) is obtained by hydrolytic polymerization. In this method of producing the modifier, water is the catalyst for the polymerization of caprolactam, which requires a much higher temperature and a corresponding higher pressure. In this embodiment, caprolactam is mixed with CNTs. The CNT concentration in the dispersion according to the method is up to 1 wt.% inclusive. The resulting dispersion is heated to a temperature of 100 to 120 °C and sonicated. The dispersion is heated and sonicated while it is continuously purged with dry nitrogen and stirred. The dispersion is then filtered to form a concentrate, and the caprolactam polymerization catalyst, which is water, is added to the dispersion. Water is added in an amount of 1 to 10 wt.% inclusive. A probe sonicator, or a microfluidic processor, or a high-speed mixer may be used for preparing the dispersion. The dispersion is filtered through a membrane filter with a pore size of 2 to 100 µm. A vacuum pump and a Bunsen flask are used to accelerate filtration. Filtration is performed in an electric oven at a temperature of at least 100 °C. Caprolactam is polymerized at 260 °C. The concentrate is dried in a vacuum cabinet at 60 °C.

In the fourth embodiment, the modifier for preparing a high-performance composite material based on a thermoplastic polymer (PA-6) is obtained by hydrolytic polymerization.

In this embodiment, ground caprolactam is mixed with CNT in an amount up to 10% inclusive until a homogeneous mixture is obtained and heated until caprolactam is fully melted in an oxygen-free atmosphere. The hot mixture is processed in a three roll mill with preheated rolls until the required dispersion quality is achieved. After cooling and grinding in the mill, up to 10 wt.% of water is added to the powder while stirring continuously to ensure uniform wetting.

The material is polymerized in a closed sealed container at a temperature about 260 °C for 10 to 20 hours inclusive. The resulting material is dried up.

The problem is also solved by providing a modifier for preparing a composite material based on a thermoplastic polymer, which is produced by any of disclosed methods and contains a thermoplastic polymer and carbon nanotubes with the amount of the latter being equal to 5 to 33 wt.%.

At least one thermoplastic polymer for the modifier is selected from the group of: polyamide or polycarbonate.

The carbon nanotubes contained therein are single-wall carbon nanotubes.

The problem is also solved by providing a method for preparing a composite material based on a thermoplastic polymer, which comprises mixing said polymer with fibers and carbon nanotubes, wherein the thermoplastic polymer is mixed with nanotubes contained in the modifier, which contains the thermoplastic polymer and carbon nanotubes with the amount of the latter being equal to 5 to 33 wt.%.

### Preferred embodiments of the invention

### Example 1

### 1) Preparing a polyamide-based modifier.

50 g of LiCl is mixed with 50 g of PA-6 and 233 ml of NMP to prepare the modifier. The PA-6 concentration is 15% of the total weight. The mixture at 70 °C is then stirred with a mixer until PA is fully dissolved, for 6 hours. The resulting solution is poured into an IKA UltraTurrax T50 high-speed disperser, 5.5 g of SWCNT (1.62%) is added, and the solution is homogenized until energy density 2 kW^{∗}h/l. Then 300 ml of distilled water is added to the resulting dispersion while stirring and left for 24 hours until complete coagulation.

After coagulation, the resulting mixture is poured into a filtering funnel (filter pore size is 20 microns) and filtered with additional rinsing until NMP and LiCl are completely removed from the solution. After filtration, the resulting material is dried in a drying cabinet at a temperature of 80 °C to a humidity of 50% further dried in a rotary evaporator at 110 °C and 100 mbar pressure to avoid air oxidation of the material. After that, the material is ground into powder with a grinder (milled) and the final drying is carried out in a vacuum cabinet at 120 °C for 10 hours to completely remove moisture from the material.

Thus prepared SWCNT concentrate in polyamide with SWCNT concentration 10 wt.% and PA concentration 90 wt.% is then used as a modifier in the form of a powder.

Where necessary, the composite material is melted in an extruder followed by the production of pellets for further use on injection molding machines.

### 2) Preparing a high-performance polyamide-based composite materials.

10 g of the resulting modifier is mixed with 20 g of carbon fibers and 170 g of PA-6 polymer using a twin screw extruder. Pellets of the composite material are prepared, from which the test samples are prepared by injection molding.

The prepared polymer formulation has the following composition: PA-6 polymer - 89.5%, SWCNT - 0.5%, carbon fibers - 10%. The measured tensile strength of the samples was 140 MPa and the electrical resistivity - 100 Ohm^{∗}cm.

### 3) Preparing high-performance polyethylene-based composite material.

5 g of the PA-based modifier is mixed with 10 g of carbon fibers and 185 g of polyethylene (PE) using a twin screw extruder. Thus, prepared pellets of the composite material are then used for preparation of the test samples by injection molding.

The prepared polymer formulation has the following composition: PE polymer - 92.5%, SWCNT - 0.25 %, PA - 2.25%, glass fiber - 5%. The tensile strength of the samples was 50 MPa and the electrical resistivity 10⁷ Ohm·cm.

### 4) Preparing a high-performance polypropylene-based composite material.

15 g of the PA-based modifier is mixed with 35 g of basalt fibers and 150 g of polypropylene (PP) using a twin screw extruder. Thus prepared pellets of the composite material are then used for preparation of standard samples by injection molding.

The prepared polymer composition has the following composition: PP polymer - 75%, SWCNT - 0.75 %, PA - 6.75%, basalt fibers - 17.5%. The tensile strength of the samples was 73 MPa and the electrical resistivity was 10⁶ Ohm·cm.

### Example 2

### 1) Preparing a polycarbonate (PC)-based modifier.

50 g of PC is mixed with 300 ml of NMP to prepare the modifier. The PC concentration is 16.7% of the total weight. The mixture at 70 °C is then stirred with a mixer until PC is fully dissolved, for 6 hours. The resulting solution is mixed using an IKA UltraTurrax T50 high-speed disperser, where 3 g of Tuball SWCNT is subsequently added, and the mixture is mixed until energy density of 2 kWh/l.

To coagulate, 300 ml of distilled water is then added to the resulting dispersion while stirring, and the mixture is left for 24 hours until complete coagulation. After coagulation, the mixture is poured into a filtering funnel (filter pore size is 20 microns) and filtered with additional rinsing with water until NMP is completely removed from the solution. After filtration, the resulting material is dried in a drying cabinet at a temperature of 80 °C to a humidity of 50% and further dried in a rotary evaporator at a temperature 110 °C and a pressure 100 mbar to avoid air oxidation of the material. The material is then ground using a grinder (milled) and the final drying is carried out in a vacuum cabinet at 120 °C for 10 hours to completely remove moisture from the material.

Thus, a concentrate of SWCNT in polycarbonate with an SWCNT concentration 16.7 wt.% and a PC concentration 83.3 wt.% is produced, which is then used as the modifier. The modifier is a powder.

If the concentrate is preferred in the form of pellets, it can be passed through an extruder to form pellets for further use.

### 2) Preparing a high-performance PC-based composite material.

20 g of the resulting modifier is mixed with 20 g of carbon fibers and 160 g of PC polymer using a twin screw extruder. Thus, prepared pellets of the composite material are then used for preparation of the standard samples by injection molding.

The prepared polymer composite has the following composition: PC polymer - 88.33%, SWCNT - 1.67%, carbon fibers - 10%. The tensile strength of the samples was 64 MPa and the specific resistivity 10⁴ Ohm·cm.

### Example 3

### 1) Preparing a modifier.

4.2 g of Tuball SWCNT is placed in a beaker with 40 g of caprolactam and heated on a hot plate to 120 °C while continuously purging it with dry nitrogen and stirring with a magnetic stirrer. Stirring is continued for 1 hour to remove moisture from caprolactam and the mixture is then sonicated at 240 W for 10 minutes while purging with dry nitrogen and stirring. C10 catalyst (Bruggemann Group, Germany) in the amount of 1.2 g, and then 0.8 g of C20P activator are added into the dispersion and, after additional stirring for 1 minute, the temperature is increased to 150 °C. This initiates polymerization of caprolactam, which usually ends within 15 minutes.

Thus, an SWCNT concentrate in polyamide 6 with SWCNT concentration 10 wt.% and PA-6 concentration 90 wt.% is produced, which is then used as the modifier. The modifier is a powder.

The resulting powder is stored in a sealed container in the nitrogen atmosphere. Where necessary, the composite material is melted in an extruder followed by the production of pellets for further use on injection molding machines.

### 2) Preparing high-performance polyamide-based composite material.

10 g of the resulting modifier is mixed with 323 g of PA-6 polymer using a twin screw extruder. The prepared polymer composition has the following composition: PA-6 polymer - 99.7%, SWCNT - 0.3%. The polymer composition is produced as pellets, from which standard samples are prepared by injection molding.

The bending strength measurement shows that elastic modulus increased to 4.5 GPa, and strength was 164 MPa, which is higher than the values for pure PA-6 polymer, for which the respective values are 2.8 GPa and 150 MPa. The resulting values are provided in Table 1.

10 g of the resulting modifier is mixed with 290 g of PA-6 polymer and 33.3 g of short carbon fibers using a twin screw extruder. The prepared polymer composition has the following composition: PA-6 polymer - 89.7%, carbon fibers - 10%, and CNT - 0.3%. Standard samples are then prepared by injection molding. The bending strength measurement shows that elastic modulus increased to 9.5 GPa, and strength was 201 MPa, which is higher than the values for pure PA-6 polymer.

2 g of the resulting modifier is mixed with 30 g of carbon fibers and 68 g of PA-6 polymer using a twin screw extruder. Pellets of the composite material are prepared. Standard samples are then prepared by injection molding. The prepared polymer composition has the following composition: PA-6 polymer - 69.8%, CNT - 0.2%, carbon fibers - 30%. The bending strength of the samples was 585 MPa, and elastic modulus was 33 GPa. For comparison, a similar composite material that contains 30% carbon fibers but no CNT showed elastic modulus of 30 MPa and bending strength of 450 MPa. The results are provided in Table 1.

The specific resistivity of the samples was 0.1 Ohm·cm.

### Example 4

### 1) Preparing a modifier.

1 g of Tuball SWCNT is placed in a beaker with 99 g of caprolactam and heated on a hot plate to 100-120 °C while continuously purging with dry nitrogen and stirring with a magnetic stirrer to produce a dispersion. Stirring is continued for 1 hour to remove moisture from caprolactam. The mixture is then sonicated at 240 W for 10 minutes while purging with dry nitrogen and stirring. The resulting dispersion is filtered through a membrane filter with a pore size of 2 µm. A vacuum pump and a 1 L Bunsen flask are used to accelerate the filtration process. To maintain the dispersion temperature, filtration is carried out in an electric oven at a temperature at least 100 °C. When the initial dispersion weight is 100 g, the weight of caprolactam that passed through the filter is 97 g. The weight of the concentrate that was left on the filter is 3 g, the concentration of nanotubes in the concentrate is 33.3%. 0.3 g of water is added to said concentrate as a catalyst. Caprolactam polymerization is carried out at a temperature 260 °C for 6 hours followed by drying up in a vacuum cabinet at a temperature 60 °C.

Thus, an SWCNT concentrate in polyamide with an SWCNT concentration 33 wt.% and a PA-6 concentration 67 wt.% is produced, which is then used as a modifier. The modifier is a powder.

### 2) Preparing a high-performance polyamide-based composite material.

10 g of the resulting modifier is mixed with 20 g of PA-6 polymer and 3.3 g of carbon fibers using a twin screw extruder to produce a high-performance PA-based composite material in a form of pellets, from which standard samples were subsequently prepared by injection molding. The prepared polymer composition has the following composition: PA-6 polymer - 80%, CNT - 10%, carbon fibers - 10%.

The samples with 10% CNT, have the tensile strength 160 MPa, which is 1.6 times higher than the tensile strength of the PA-6 samples with 10% carbon fibers but without nanotubes. The specific resistivity of the samples is 1 Ohm·cm.

### Example 5

### 1) Preparing a modifier.

An Exakt three roll mill is used to mix 4 g of Tuball SWCNT, 40 g of caprolactam, and 4 g of water. 110 passes are carried out to prepare a nanotube dispersion. The resulting dispersion in caprolactam is polymerized in a sealed reactor at a temperature 260 °C for 12 hours. When the reactor cools down to room temperature, the resulting material is removed and dried in a vacuum oven at 60 °C for an hour.

Thus, an SWCNT concentrate in polyamide with an SWCNT concentration 10 wt.% and a PA-6 concentration 90 wt.% is produced, which is then used as the modifier. The modifier is a powder.

### 2) Preparing a high-performance polyamide-based composite material.

To produce a composite material based on a thermoplastic polymer and the resulting modifier, in this example, 1 g of the resulting modifier is mixed with 20 g of carbon fibers and 179 g of PA-6 polymer using a twin screw extruder. Pellets of the composite material are prepared and standard samples are then prepared by injection molding.

The composition of the resulting composite material is: SWCNT - 0.5%, carbon fibers - 10%, PA-6 - 89.5%, and has the measured tensile strength 162 MPa and the specific resistivity 2 Ohm·cm.

**Table 1. Properties of PA-6 with Tuball SWCNT and carbon fibers**

| | Bending strength, MPa | Rel. elongation, % | Young's modulus, GPa |
|---|---|---|---|
| PA-6 | 150 | 20 | 2.8 |
| PA-6 + 0.3% CNT | 164 | 9 | 4.5 |
| PA-6 + 0.3% CNT + 10% carbon fiber | 201 | 7 | 9.5 |
| PA-6 + 30% carbon fiber | 450 | 3 | 30 |
| PA-6 + 0.2% CNT + 30% carbon fiber | 585 | 4 | 33 |

### Industrial Applicability

The invention can be used in various industries where an increased strength of the parts made of composite thermoplastic materials is required while keeping their low weight, e.g., aerospace, aviation, automotive, as well as mechanical engineering, medicine, manufacture of sports products, as well as in applications where electrical conductivity requirements are imposed on the composite material.

## Claims

1. A method for producing a modifier for preparing a composite material based on a thermoplastic polymer **characterized in that** the thermoplastic polymer is mixed with a solvent and salts of alkali metals with the following ratio of components (wt.%):
| | |
|---|---|
| thermoplastic polymer | ― 3-15, |
| solvent | ― 70-94, |
| salts of alkali metals | ― 3-15, |
until the polymer is fully dissolved, and then carbon nanotubes are added to the mixture in an amount up to 5 wt.% while stirring to produce a dispersion, then a coagulant is added to the dispersion under continuous stirring, the resulting dispersion is then filtered, and the filter cake is rinsed and dried up.

2. A method according to claim 1, **characterized in that** the solvent is selected from the group of: alcohol, or N-methylpyrrolidone, or dimethylacetamide.

3. The method according to claim 1, **characterized in that** the alkali metal salt is lithium chloride or calcium chloride.

4. The method according to claim 1, **characterized in that** carbon nanotubes are single-wall carbon nanotubes.

5. The method according to claim 1, **characterized in that** the dispersion of carbon nanotubes is prepared using a high-speed disperser, a probe sonicator, a microfluidic processor, a high-speed mixer, or a three roll mill.

6. The method according to claim 1, **characterized in that** the coagulant is water or ethanol.

7. The method according to claim 1, **characterized in that** the dispersion is filtered through a membrane filter with a pore size of 5 to 100 microns.

8. The method according to claim 1, **characterized in that** the filter cake is dried up in a drying cabinet followed by further drying using a rotary evaporator.

9. The method according to claim 1, **characterized in that** the filter cake is milled with a grinder and further vacuum-treated.

10. A method for producing a modifier for preparing a composite material based on a thermoplastic polymer, **characterized in that** carbon nanotubes are mixed with caprolactam so that their content in the mixture is at least 1 wt.%, the resulting dispersion is heated to a temperature 80 to 120°C and sonicated, a caprolactam polymerization catalyst and a caprolactam polymerization activator are added, and the resulting dispersion is then heated and dried up.

11. The method according to claim 10, **characterized in that** carbon nanotubes are single-wall carbon nanotubes.

12. The method according to claim 10, **characterized in that** the catalyst of caprolactam polymerization is selected from the group of: alkali metals, or hydrides of alkali metals, or oxides or hydroxides thereof, or their compounds with caprolactam.

13. The method according to claim 10, **characterized in that** the catalyst of caprolactam polymerization is added to the dispersion in an amount 0.1 to 10 wt.%.

14. The method according to claim 10, **characterized in that** the activator of caprolactam polymerization is a substance from the group of: isocyanates or diisocyanates.

15. The method according to claim 10, **characterized in that** the activator of caprolactam polymerization is added to the dispersion in an amount 0.01 to 10 wt.%.

16. The method according to claim 10, **characterized in that** the dispersion is heated while it is continuously purged with dry nitrogen and stirred.

17. The method according to claim 10, **characterized in that** the dispersion is sonicated while it is continuously purged with dry nitrogen and stirred.

18. The method according to claim 10, **characterized in that** the dispersion is produced using a probe sonicator, or a microfluidic processor, or a high-speed mixer.

19. A method for producing a modifier for preparing a composite material based on a thermoplastic polymer, **characterized in that** carbon nanotubes are mixed with caprolactam so that their content in the resulting mixture is not more than 1 wt.%, the resulting dispersion is heated to a temperature 100 to 120°C and sonicated, then filtered to form a concentrate, then a caprolactam polymerization catalyst is added, and the resulting dispersion is then heated and dried up.

20. The method according to claim 19, **characterized in that** carbon nanotubes are single-wall carbon nanotubes.

21. The method according to claim 19, **characterized in that** the dispersion is heated while it is continuously purged with dry nitrogen and stirred.

22. The method according to claim 19, **characterized in that** the dispersion is sonicated while it is continuously purged with dry nitrogen and stirred.

23. The method according to claim 19, **characterized in that** the dispersion is produced using a probe sonicator, or a microfluidic processor, or a high-speed mixer.

24. The method according to claim 19, **characterized in that** the catalyst of caprolactam polymerization is added to the dispersion in an amount 1 to 10 wt.%.

25. The method according to claim 19, **characterized in that** the catalyst of caprolactam polymerization is water.

26. The method according to claim 19, **characterized in that** the dispersion is filtered through a membrane filter with a pore size 2 to 100 µm.

27. The method according to claim 19, **characterized in that** a vacuum pump and a Bunsen flask are used in filtration.

28. The method according to claim 19, **characterized in that** the dispersion is filtered in an electric oven at a temperature not lower than 100°C.

29. The method according to claim 19, **characterized in that** the concentrate is dried up in a vacuum cabinet.

30. A method for producing a modifier for preparing a composite material based on a thermoplastic polymer, **characterized in that** carbon nanotubes are mixed with caprolactam using a three roll mill, so that the content of carbon nanotubes in the resulting mixture does not exceed 10 wt.%, a caprolactam polymerization catalyst is added to the resulting dispersion, polymerization is carried out in a reactor at a temperature about 260°C, then the resulting material is removed and dried up.

31. The method according to claim 30, **characterized in that** carbon nanotubes are single-wall carbon nanotubes.

32. The method according to claim 30, **characterized in that** the catalyst of caprolactam polymerization is added to the dispersion in an amount not more than 10 wt.%.

33. The method according to claim 30, **characterized in that** the catalyst of caprolactam polymerization is water.

34. A modifier for preparing a composite material based on a thermoplastic polymer, **characterized in that** the modifier is produced according to any of claims 1-9, or 10-18, or 19-29, or 30-33, and contains a thermoplastic polymer and carbon nanotubes with the amount of the latter being equal to 5 to 33 wt.%.

35. The modifier according to claim 34, **characterized in that** at least one thermoplastic polymer is selected from the group of: polyamide or polycarbonate.

36. The modifier according to claim 34, **characterized in that** carbon nanotubes are single-wall carbon nanotubes.

37. A method for preparing a composite material based on a thermoplastic polymer that comprises mixing said polymer with fibers and carbon nanotubes, **characterized in that** the thermoplastic polymer is mixed with nanotubes contained in the modifier according to claim 34-36, which contains a thermoplastic polymer and carbon nanotubes with the amount of the latter being equal to 5 to 33 wt.%.

38. The method according to claim 37, **characterized in that** carbon nanotubes are single-wall carbon nanotubes.

39. The method according to claim 37, **characterized in that** at least one thermoplastic polymer is selected from the group of: polyamide, or polypropylene, or polyethylene, or polycarbonate.

40. The method according to claim 37, **characterized in that** the composite material contains not more than 70 wt.% fibers.

41. The method according to claim 37, **characterized in that** the fibers are carbon fibers.

42. The method according to claim 37, **characterized in that** the fibers are basalt fibers.

43. The method according to claim 37, **characterized in that** the fibers are glass fibers.

44. The method according to claim 37, **characterized in that** the polymer is mixed with fibers and the modifier using an extruder.
